# EUROPÄISCHE PATENTSCHRIFT

(11) **EP 3 960 658 B1**
(45) Veröffentlichungstag und Bekanntmachung des Hinweises auf die Patenterteilung: **11.06.2025**
(21) Anmeldenummer: 20192811.6
(22) Anmeldetag: 26.08.2020
(51) Int. Cl.: B65G 1/04, B65G 1/06, B65G 57/30

(54) **BESCHICKUNGSFAHRZEUG FÜR EINE STAPELLAGERANORDNUNG**
FEEDER VEHICLE FOR A STACK STORAGE ASSEMBLY
VÉHICULE DE CHARGEMENT POUR UN AGENCEMENT DE STOCKAGE EMPILÉ

(43) Veröffentlichungstag der Anmeldung: 02.03.2022
(73) Patentinhaber: Jungheinrich Aktiengesellschaft, 22047 Hamburg (DE)
(72) Erfinder: Cavelius, Jörg, 61118 Bad Vilbel (DE); Becker, Michael, 63512 Hainburg (DE); Liebhaber, Markus, 61440 Oberursel (DE); Morawietz, Timm, 66636 Tholey-Überroth (DE)
(74) Vertreter: Keil & Schaafhausen Patentanwälte PartGmbB

(56) Entgegenhaltungen:
- EP-A2- 3 053 855
- CA-A1- 3 086 277
- US-A1- 2014 086 714

## Beschreibung

Die vorliegende Erfindung betrifft ein Beschickungsfahrzeug für eine Stapellageranordnung mit einem Fahrgestell, einer ersten Laufradanordnung, mit der das Beschickungsfahrzeug in eine erste Richtung verfahrbar ist, einer zweiten Laufradanordnung, mit der das Beschickungsfahrzeug in eine zweite Richtung quer zur ersten Richtung verfahrbar ist, und einer Hubeinrichtung, die einen senkrecht zur ersten Richtung und zur zweiten Richtung wirkenden Hubantrieb aufweist, wobei die Hubeinrichtung eine Hubplattform zum Anheben eines Behälters aufweist, wobei die Hubplattform mit dem Hubantrieb aus einer Grundstellung in Schwerkraftrichtung nach oben in eine angehobene Stellung verlagerbar ist.

Ein derartiges Beschickungsfahrzeug ist aus EP 3 053 855 A2 bekannt. Das Beschickungsfahrzeug weist einen Motor auf, der sowohl auf eine Hubeinrichtung als auch auf Verlagerungseinrichtungen für zwei Fahrwerke verwendet werden kann, die orthogonal zueinander gerichtet sind.

Ein weiteres Beschickungsfahrzeug ist beispielsweise aus WO 2019/238703 A1 bekannt.

Das bekannte Beschickungsfahrzeug wird oberhalb einer Stapellageranordnung verfahren. In der Stapellageranordnung sind Behälterstapelräume in Form einer Matrix in Reihen und in Spalten angeordnet. Damit das Beschickungsfahrzeug alle Behälterstapelräume erreichen kann, ist oberhalb der Stapellageranordnung ein Schienensystem verlegt, das eine erste Gruppe von Schienen aufweist, die in Richtung der Reihen verlaufen, und eine zweite Gruppe von Schienen, die in Richtung der Spalten verlaufen. Die erste Laufradanordnung wirkt dann mit der ersten Gruppe von Schienen zusammen. Die zweite Laufradanordnung wirkt mit der zweiten Gruppe von Schienen zusammen. Ein Wechsel zwischen der ersten Schienenanordnung und der zweiten Schienenanordnung erfolgt dadurch, dass die zweite Laufradanordnung nach unten aus dem Fahrgestell herausgeschoben wird und mit der zweiten Gruppe von Schienen in Eingriff kommt.

Für die Betätigung der zweiten Laufradanordnung ist allerdings ein Antrieb erforderlich, der in der Lage ist, die zweite Laufradanordnung gegen das Gewicht des Beschickungsfahrzeugs, ggfs. mit aufgenommenem Behälter, nach unten aus dem Beschickungsfahrzeug heraus zu bewegen. Dies erfordert einen relativ großen Aufwand.

CA 3 086 277 A1 zeigt ein Beschickungsfahrzeug für eine Stapellageranordnung, das dafür vorgesehen ist, auf der Oberseite der Stapellageranordnung verfahren zu werden. Auch dieses Beschickungsfahrzeug weist zwei Sätze von Laufrädern auf, die orthogonal zueinander gerichtet sind, so dass man einen Satz von Laufrädern verwenden kann, um das Beschickungsfahrzeug in eine erste Richtung zu bewegen, und einen zweiten _Satz von Laufrädern, um das Beschickungsfahrzeug in eine orthogonal zur ersten Richtung gerichtete zweite Richtung bewegen zu können.

Der Erfindung liegt die Aufgabe zugrunde, ein Beschickungsfahrzeug einfach und kostengünstig auszubilden.

Diese Aufgabe wird bei einem Beschickungsfahrzeug der eingangs genannten Art dadurch gelöst, dass, der Hubantrieb auf die zweite Laufradanordnung in Schwerkraftrichtung nach unten wirkt und die zweite Laufradanordnung nach unten über die erste Laufradanordnung hinaus verlagert, wobei der Hubantrieb über die Hubplattform auf die zweite Laufradanordnung wirkt.

Dieses Beschickungsfahrzeug wird in einer Stapellageranordnung verwendet, bei dem ein Beschickungsraum unterhalb der Behälterstapelräume angeordnet ist. Die Behälter werden also von unten in die Behälterstapelräume eingelagert und nach unten aus den Behälterstapelräumen entnommen. Die Behälterstapelräume sind auch hier in Form einer Matrix mit Reihen und Spalten angeordnet. Das Beschickungsfahrzeug kann dann mit der ersten Laufradanordnung beispielsweise in Richtung der Reihen und mit der zweiten Laufradanordnung in Richtung der Spalten verfahren werden. Zum Einlagern eines Behälters wird das Beschickungsfahrzeug unter einen Behälterstapelraum gefahren. Der auf dem Beschickungsfahrzeug, genauer gesagt auf der Hubplattform befindliche Behälter wird angehoben, bis er eine Halteeinrichtung passiert, die am unteren Ende eines Behälterstapelraums angeordnet ist. Wenn der Behälter die Halteeinrichtung passiert hat und die Hubplattform abgesenkt wird, hält die Halteeinrichtung den Behälter fest. Wenn sich bereits ein oder mehrere Behälter in dem Behälterstapelraum befinden, dann hebt der einzulagernde Behälter diese Behälter mit an und bildet dann den untersten Behälter eines Stapels. Wenn der Behälter ausgelagert werden soll, tritt wieder das Beschickungsfahrzeug in Aktion und hebt mit seiner Hubplattform den untersten Behälter eines Stapels an, bis er von der Halteeinrichtung freikommt. Die Halteeinrichtung wird dann offengehalten und die Hubplattform mit dem darauf befindlichen Behälter oder Behälterstapel wird abgesenkt, bis der zu entnehmende Behälter an der Halteeinrichtung vorbeigetreten ist. Danach wird die Halteeinrichtung wieder aktiviert und hält verbleibende Behälter in dem Behälterstapelraum fest.

Der Hubantrieb hat im vorliegenden Fall eine zweite Funktion. Er dient nicht nur dazu, die Hubplattform anzuheben und abzusenken, sondern er dient auch dazu, die zweite Laufradanordnung nach unten zu drücken, so dass das Beschickungsfahrzeug, wenn die zweite Laufradanordnung nach unten über die erste Laufradanordnung hinaus verlagert worden ist, auf der zweiten Laufradanordnung bewegt werden kann. Damit kann das Beschickungsfahrzeug in zwei Richtungen bewegt werden. Ein zusätzlicher Antrieb zum Verlagern der zweiten Laufradanordnung ist nicht erforderlich. Der Hubantrieb, der die Hubplattform betätigt, muss ohnehin in der Lage sein, einen Behälter anzuheben und abzusenken. Er kann daher ohne größeren Aufwand auch so dimensioniert werden, dass er das zusätzliche Gewicht des Beschickungsfahrzeugs mit handhaben kann.

. Man muss den Hubantrieb also nicht mechanisch umschalten, damit er einerseits auf die Hubplattform und andererseits auf die zweite Laufradanordnung wirkt. Dies ergibt einen einfachen Aufbau.

Vorzugsweise ist die Hubplattform durch den Hubantrieb aus der Grundstellung in Schwerkraftrichtung nach unten verlagerbar. Wenn die zweite Laufradanordnung nach unten über die erste Laufradanordnung hinaus verlagert werden soll, wird die Hubplattform ebenfalls eine gewisse Strecke abgesenkt. Dies ist auch dann möglich, wenn sich ein Behälter auf der Hubplattform befindet. Der Behälter wird dann allenfalls weiter in das Beschickungsfahrzeug hinein bewegt, stört also beim Verfahren des Beschickungsfahrzeugs in der zweiten Richtung nicht.

Vorzugsweise ist eine Federanordnung zwischen dem Fahrgestell und der zweiten Laufradanordnung vorgesehen, die entgegen der in Schwerkraftrichtung nach unten gerichteten Wirkung des Hubantriebs wirkt. Der Hubantrieb muss also nur in der Lage sein, die zweite Laufradanordnung nach unten aus der ersten Laufradanordnung hinaus zu drücken. Die Rückbewegung der zweiten Laufradanordnung dergestalt, dass das Beschickungsfahrzeug danach auf der ersten Laufradanordnung verfahrbar ist, erfolgt durch die Wirkung der Federanordnung.

Hierbei ist bevorzugt, dass die Federanordnung ein Federelement, insbesondere eine Druckfeder aufweist. Die Druckfeder wird komprimiert, wenn die zweite Laufradanordnung über die erste Laufradanordnung hinaus abgesenkt wird. Sie entspannt sich, wenn die zweite Laufradanordnung wieder angehoben wird. Bei einer anderen Ausbildung des Federelements speichert das Federelement Energie auf andere Weise.

Vorzugsweise weist die zweite Laufradanordnung mindestens ein Laufrad auf, das an einer Schwinge angeordnet ist. Die Anordnung an einer Schwinge erleichtert das Verlagern der zweiten Laufradanordnung. Die Schwinge ist schwenkbar am Fahrgestell angeordnet. Das Laufrad befindet sich in einer gewissen Entfernung von der Drehachse, die die Schwinge mit dem Fahrgestell verbindet. Wenn die Schwinge dann verschwenkt wird, kann das zweite Laufrad problemlos bewegt werden.

Vorzugsweise ist die Schwinge in einem in der zweiten Richtung mittleren Bereich am Fahrgestell aufgehängt. Dementsprechend befindet sich das zweite Laufrad in einem äußeren Bereich des Beschickungsfahrzeugs, was sich positiv auf die Stabilität des Beschickungsfahrzeugs beim Fahren auswirkt. Die Gefahr, dass das Beschickungsfahrzeug kippt, wird kleingehalten.

Vorzugsweise wirkt der Hubrahmen auf die Schwinge. Dies ist eine relativ einfache Möglichkeit, um die Schwinge zu verschwenken.

Hierbei ist bevorzugt, dass der Hubrahmen über eine Kugelanordnung und eine Kugelauflage auf die Schwinge wirkt. Damit wird die Reibung zwischen der Hubplattform und der Schwinge kleingehalten. Dies wirkt sich günstig auf einen möglichen Verschleiß aus.

Vorzugsweise weist der Hubantrieb eine Schubkette auf, die bei einer Bewegung des Hubrahmens aus der Grundstellung in Schwerkraftrichtung nach oben mit Druck auf den Hubrahmen wirkt und bei einer Bewegung des Hubrahmens aus der Grundstellung in Schwerkraftrichtung nach unten mit Zug auf den Hubrahmen wirkt. Eine derartige Anwendung ist möglich, weil die Schubkette sowohl auf Zug als auch auf Druck belastet werden kann.

Die Erfindung wird im Folgenden anhand eines bevorzugten Ausführungsbeispiels in Verbindung mit der Zeichnung beschrieben. Hierin zeigen:
- Fig. 1: eine schematische perspektivische Darstellung eines Beschickungsfahrzeugs mit einer ersten Laufradanordnung und einer zweiten Laufradanordnung,
- Fig. 2: eine schematische Seitenansicht des Beschickungsfahrzeugs in einem Zustand, in dem die erste Laufradanordnung aktiv ist,
- Fig. 3: eine schematische Seitenansicht des Beschickungsfahrzeugs in einem Zustand, bei dem man zwischen der ersten Laufradanordnung und der zweiten Laufradanordnung wechselt und
- Fig. 4: eine schematische Seitenansicht des Beschickungsfahrzeugs in einem Zustand, bei dem die zweite Laufradanordnung aktiv ist.

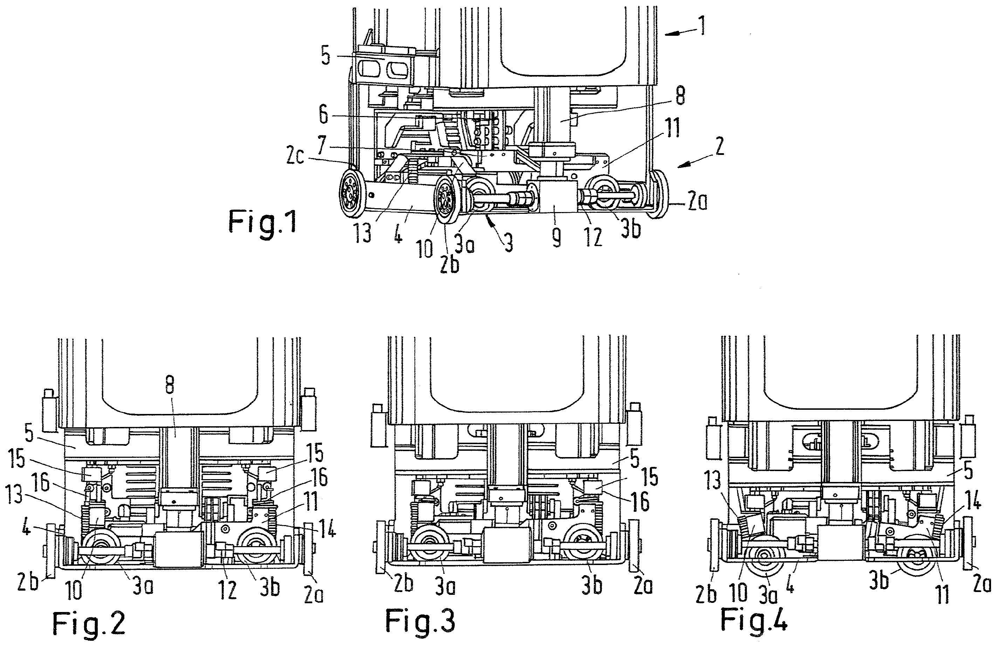

Fig. 1 zeigt schematisch ein Beschickungsfahrzeug 1, das in einer Stapellageranordnung verwendet werden kann, um Behälter von unten in Behälterstapelräume einzulagern und Behälter von unten aus den Behälterstapelräumen zu entnehmen.

Das Beschickungsfahrzeug weist eine erste Laufradanordnung 2 mit ersten Laufrädern 2a, 2b, 2c und eine zweite Laufradanordnung 3 mit zweiten Laufrädern 3a, 3b auf. Die ersten Laufräder 2a-2c sind an einem Fahrgestell 4 befestigt. Mit der ersten Laufradanordnung 2 kann das Beschickungsfahrzeug 1 in eine erste Richtung verfahren werden. Die zweiten Laufräder 3a, 3b der zweiten Laufradanordnung 3 sind senkrecht zu den ersten Laufrädern 2a-2c gerichtet. Mit der zweiten Laufradanordnung 3 kann das Beschickungsfahrzeug 1 in eine Richtung senkrecht oder quer zur ersten Richtung verfahren werden.

Das Beschickungsfahrzeug 1 weist weiterhin eine Hubeinrichtung auf, mit der es in der Lage ist, einen nicht näher dargestellten Behälter von unten in einen Behälterstapelraum einer Stapellageranordnung einzulagern oder den Behälter nach unten aus dem Behälterstapelraum zu entnehmen. Hierzu weist das Beschickungsfahrzeug 1 eine Hubplattform 5 auf, die von einer Hubeinrichtung angehoben werden kann. Die Hubeinrichtung weist im vorliegenden Fall eine Schubkette 6 auf. Die Schubkette 6 wird durch einen Antriebsmotor 7 angetrieben. Die Hubplattform 5 kann durch eine Führung 8 geführt werden.

Die ersten Laufräder 2a-2c sind unmittelbar am Fahrgestell 4 angeordnet. Sie können durch einen Fahrantrieb 9 angetrieben werden.

Die zweiten Laufräder 3a, 3b sind jeweils an einer Schwinge 10, 11 angeordnet, wobei die Schwingen 10, 11 verschwenkbar am Fahrgestell 4 befestigt sind. Lediglich für die Schwinge 11 ist ein Drehpunkt 12 erkennbar.

Die Schwingen 10, 11 sind über Druckfedern 13, 14 am Fahrgestell 4 abgestützt. Ohne Einwirkung anderer Kräfte bewirken die Druckfedern 13, 14, dass die zweiten Laufräder 3a, 3b in die in Fig. 2 dargestellte inaktive Position verschwenkt werden, in der das Beschickungsfahrzeug 1 lediglich auf der ersten Laufradanordnung 2 verfahren werden kann.

Die Schubkette 6 ist fest mit der Hubplattform 5 verbunden. Die Hubplattform 5 ist an ihrer Unterseite (die Richtungsangaben "oben" und "unten" beziehen sich auf die Schwerkraftrichtung) mit einer Kugelrollenanordnung 15 versehen. Die Schwingen 10, 11 weisen auf ihrer Oberseite eine Kugelauflage 16 auf.

Fig. 2 zeigt eine Grundstellung der Hubplattform 5. Die Grundstellung der Hubplattform 5 ist eine Stellung, in der ein auf der Hubplattform aufgenommener Behälter beim Transport in die erste Richtung, wenn das Beschickungsfahrzeug 1 auf der ersten Laufradanordnung 2 rollt, im Beschickungsraum verfahren wird. Die Hubplattform 5 kann aus dieser Grundstellung nach oben bewegt werden, um den Behälter in einen Behälterstapelraum einzulagern oder den Behälter von dort zu entnehmen.

Die Hubplattform 5 kann jedoch auch mit Hilfe der Schubkette 6 aus der Grundstellung heraus nach unten verlagert werden. Dabei kommt die Kugelführungsanordnung 15 in Kontakt mit der Kugelauflage 16, wie dies in Fig. 3 dargestellt ist. Wenn die Hubplattform 5 weiter abgesenkt wird, wie dies in Fig. 4 dargestellt ist, dann werden die Schwingen 10, 11 gegenüber dem Fahrgestell verschwenkt und bewegen dadurch die zweiten Laufräder 3a, 3b über die ersten Laufräder 2a, 2b nach unten hinaus. Bei dieser Bewegung werden die Druckfedern 13, 14 komprimiert und das Fahrgestell 4 wird angehoben. Das Beschickungsfahrzeug 1 ist dann auf der zweiten Laufradanordnung 3 bewegbar.

Wenn die erste Laufradanordnung wieder aktiviert werden soll, wird die Hubplattform 5 wieder angehoben. Dieses Anheben kann bei entsprechender Dimensionierung alleine über die Kraft der Druckfedern 13, 14 erfolgen. Es ist aber auch möglich, für diese Bewegung den Hubantrieb mit der Schubkette 6 zu verwenden. Wenn die Hubplattform 5 angehoben wird, werden die Schwingen 10, 11 zurück verschwenkt und die zweiten Laufräder 3a, 3b werden gegenüber dem Fahrgestell angehoben (bzw. das Fahrgestell 4 wird gegenüber den zweiten Laufrädern 3a, 3b abgesenkt), so dass wieder die erste Laufradanordnung 2 aktiv wird.

Die Schubkette 6 wirkt zumindest beim Anheben der Hubplattform 5 aus der Grundstellung nach oben mit Druck auf die Hubplattform 5. Wenn die Hubplattform 5 hingegen aus der Grundstellung heraus nach unten verlagert wird, dann wirkt die Schubkette 6 mit Zug auf die Hubplattform 5.

Die Schwenkachse 12 der Schwingen 10, 11 ist in einem mittleren Bereich des Fahrgestells 4 angeordnet. Mit anderen Worten sind die Schwingen 10, 11 in einem mittleren Bereich am Fahrgestell 4 aufgehängt. Dies wiederum führt dazu, dass die zweiten Laufräder 3a, 3b relativ weit außen am Beschickungsfahrzeug angeordnet sein können, so dass die Beschickungsräder 3a, 3b (und ihr entsprechendes Paar auf der anderen Seite des Beschickungsfahrzeugs 1) eine relativ große Aufstandsfläche bilden. Dies wirkt sich positiv auf die Stabilität des Beschickungsfahrzeugs 1 aus.

## Patentansprüche

1. Beschickungsfahrzeug (1) für eine Stapellageranordnung mit einem Fahrgestell (4), einer ersten Laufradanordnung (2), mit der das Beschickungsfahrzeug (1) in eine erste Richtung verfahrbar ist, einer zweiten Laufradanordnung (3), mit der das Beschickungsfahrzeug (1) in eine zweite Richtung quer zur ersten Richtung verfahrbar ist, und einer Hubeinrichtung, die einen senkrecht zur ersten Richtung und zur zweiten Richtung wirkenden Hubantrieb (6, 7) aufweist, wobei die Hubeinrichtung eine Hubplattform (5) zum Anheben eines Behälters aufweist, wobei die Hubplattform (5) mit dem Hubantrieb (6, 7) aus einer Grundstellung in Schwerkraftrichtung nach oben in eine angehobene Stellung verlagerbar ist, **dadurch gekennzeichnet, dass** der Hubantrieb (6, 7) auf die zweite Laufradanordnung (3) in Schwerkraftrichtung nach unten wirkt und die zweite Laufradanordnung (3) nach unten über die erste Laufradanordnung (2) hinaus verlagert, wobei der Hubantrieb (6, 7) über die Hubplattform (5) auf die zweite Laufradanordnung (3) wirkt.

2. Beschickungsfahrzeug nach Anspruch 1, **dadurch gekennzeichnet, dass** die Hubplattform (5) durch den Hubantrieb (6, 7) aus der Grundstellung in Schwerkraftrichtung nach unten verlagerbar ist.

3. Beschickungsfahrzeug nach Anspruch 1 oder 2, **dadurch gekennzeichnet, dass** eine Federanordnung (13, 14) zwischen dem Fahrgestell (4) und der zweiten Laufradanordnung (3) vorgesehen ist, die entgegen der in Schwerkraftrichtung nach unten gerichteten Wirkung des Hubantriebs (6, 7) wirkt.

4. Beschickungsfahrzeug nach Anspruch 3, **dadurch gekennzeichnet, dass** die Federanordnung (13, 14) ein Federelement, insbesondere eine Druckfeder aufweist.

5. Beschickungsfahrzeug nach einem der Ansprüche 1 bis 4, **dadurch gekennzeichnet, dass** die zweite Laufradanordnung (3) mindestens ein Laufrad (3a, 3b) aufweist, das an einer Schwinge (10, 11) angeordnet ist.

6. Beschickungsfahrzeug nach Anspruch 5, **dadurch gekennzeichnet, dass** die Schwinge (10, 11) in einem in der zweiten Richtung mittleren Bereich am Fahrgestell (4) aufgehängt ist.

7. Beschickungsfahrzeug nach Anspruch 5 oder 6, **dadurch gekennzeichnet, dass** der Hubrahmen (5) auf die Schwinge (10, 11) wirkt.

8. Beschickungsfahrzeug nach Anspruch 7, **dadurch gekennzeichnet, dass** der Hubrahmen (5) über eine Kugelanordnung (15) und eine Kugelauflage (16) auf die Schwinge (10, 11) wirkt.

9. Beschickungsfahrzeug nach einem der Ansprüche 1 bis 8, **dadurch gekennzeichnet, dass** der Hubantrieb (6, 7) eine Schubkette (6) aufweist, die bei einer Bewegung des Hubrahmens (5) aus der Grundstellung in Schwerkraftrichtung nach oben mit Druck auf den Hubrahmen (5) wirkt und bei einer Bewegung des Hubrahmens (5) aus der Grundstellung in Schwerkraftrichtung nach unten mit Zug auf den Hubrahmen (5) wirkt.

## Claims

1. Charging vehicle (1) for a stacking storage arrangement, comprising a chassis (4), a first wheel assembly (2) by means of which the charging vehicle (1) can be moved in a first direction, a second wheel assembly (3) by means of which the charging vehicle (1) can be moved in a second direction transverse to the first direction, and a lifting device, which has a lifting drive (6, 7) acting perpendicular to the first direction and to the second direction, wherein the lifting device has a lifting platform (5) which can be moved with the lifting drive (6, 7) from a basic position in the direction of gravity upwards into a raised position, **characterized in that** the lifting drive (6, 7) acts on the second impeller arrangement (3) in the direction of gravity and moves the second impeller arrangement (3) downwards beyond the first impeller arrangement (2), wherein the lifting drive (6, 7) acts on the second impeller arrangement (3) via the lifting platform (5).

2. Charging vehicle according to claim 1, **characterized in that** the lifting platform (5) can be moved downward in the direction of gravity from the basic position by the lifting drive (6, 7).

3. Charging vehicle according to claim 1 or 2, **characterized in that** a spring arrangement (13, 14) is provided between the chassis (4) and the second wheel assembly (3), which acts counter to the downward effect of the lifting drive (6, 7) in the direction of gravity.

4. Charging vehicle according to claim 3, **characterized in that** the spring arrangement (13, 14) has a spring element, in particular a compression spring.

5. Charging vehicle according to one of claims 1 to 4, **characterized in that** the second wheel assembly (3) has at least one wheel (3a, 3b) which is arranged on a swing arm (10, 11).

6. Charging vehicle according to claim 5, **characterized in that** the swing arm (10, 11) is suspended on the chassis (4) in a central region in the second direction.

7. Charging vehicle according to claim 5 or 6, **characterized in that** the lifting frame (5) acts on the swing arm (10, 11).

8. Charging vehicle according to claim 7, **characterized in that** the lifting frame (5) acts on the swing arm (10, 11) via a ball arrangement (15) and a ball bearing (16).

9. Charging vehicle according to one of claims 1 to 8, **characterized in that** the lifting drive (6, 7) has a push chain (6) which, when the lifting frame (5) moves from the basic position in the direction of gravity, acts upward with pressure on the lifting frame (5) and, when the lifting frame (5) moves from the basic position in the direction of gravity, acts downward with pull on the lifting frame (5).

## Revendications

1. Véhicule de chargement (1) pour un agencement d'entreposage par empilement avec un châssis (4), un premier système de roues de roulement (2), avec lequel le véhicule de chargement (1) peut être déplacé dans une première direction, un deuxième système de roues de roulement (3) avec lequel le véhicule de chargement (1) peut être déplacé dans une deuxième direction transversalement à la première direction et un dispositif de levage, qui comporte un mécanisme de levage (6, 7) agissant perpendiculairement à la première direction et à la deuxième direction, sachant que le dispositif de levage comporte une plateforme de levage (5) pour lever un conteneur, sachant que la plateforme de levage (5) peut être transposée dans une position levée avec le mécanisme de levage (6, 7) d'une position de base dans le sens de la gravité vers le haut **caractérisé en ce que** le mécanisme de levage (6, 7) agit sur le deuxième système de roues de roulement (3) dans le sens de la gravité vers le bas et déplace le deuxième système de roues de roulement (3) vers le bas par l'intermédiaire du premier système de roues de roulement (2), sachant que le mécanisme de levage (6, 7) agit par le biais de la plateforme de levage (5) sur le deuxième système de roues de roulement (3).

2. Véhicule de chargement selon la revendication 1, **caractérisé en ce que** la plateforme de levage (5) peut être transposée par le mécanisme de levage (6, 7) de la position de base dans le sens de la gravité vers le bas.

3. Véhicule de chargement selon la revendication 1 ou 2, **caractérisé en ce qu'**un système à ressorts (13, 14) est prévu entre le châssis (4) et le deuxième système de roues de roulement (3), qui agit contrairement à l'effet du mécanisme de levage (6, 7), dirigé vers le bas dans le sens de la gravité.

4. Véhicule de chargement selon la revendication 3, **caractérisé en ce que** le système à ressorts (13, 14) comporte un élément de ressort, en particulier un ressort de pression.

5. Véhicule de chargement selon l'une quelconque des revendications 1 à 4, **caractérisé en ce que** le deuxième système de roues de roulement (3) comporte au moins une roue de roulement (3a, 3b), qui est disposée sur un bras oscillant (10, 11).

6. Véhicule de chargement selon la revendication 5, **caractérisé en ce que** le bras oscillant (10, 11) est suspendu sur le châssis (4) dans une zone centrale dans la deuxième direction.

7. Véhicule de chargement selon la revendication 5 ou 6, **caractérisé en ce que** le cadre de levage (5) agit sur le bras oscillant (10, 11).

8. Véhicule de chargement selon la revendication 7, **caractérisé en ce que** le cadre de levage (5) agit sur le bras oscillant (10, 11) par le biais d'un système à billes (15) et d'un support à billes (16).

9. Véhicule de chargement selon l'une quelconque des revendications 1 à 8, **caractérisé en ce que** le mécanisme de levage (6, 7) comporte une chaîne de poussé (6), qui agit lors d'un déplacement du cadre de levage (5) de la position de base dans le sens de la gravité vers le haut avec pression sur le cadre de levage (5) et lors d'un déplacement du cadre de levage (5) de la position de base dans le sens de la gravité vers le bas avec traction sur la cadre de levage (5).
